# FASCICULE DE BREVET EUROPEEN

(11) **EP 2 396 581 B1**
(45) Date de publication et mention de la délivrance du brevet: **20.04.2016**
(21) Numéro de dépôt: 10704791.2
(22) Date de dépôt: 08.02.2010
(51) Int. Cl.: B29L 31/60, B29C 70/08, B29C 70/30, F16L 9/00, F16L 9/128, F16L 55/027, F24F 13/02, B29L 23/00, F16L 9/133, F16L 9/19, F16L 51/04

(54) **PIÈCES TUBULAIRES COMPOSITES DE FORME COMPLEXE**
RÖHRENFÖRMIGE VERBUNDTEILE MIT KOMPLEXEN FORMEN
COMPOSITE TUBULAR PARTS WITH COMPLEX SHAPES

(30) Priorité: 10.02.2009 FR 0950815
(43) Date de publication de la demande: 21.12.2011
(73) Titulaire: Airbus Group SAS, 31700 Blagnac (FR); Composites Atlantic Limited, Lunenburg, NS BOJ 2CO (CA)
(72) Inventeur: CAVALIERE, Frédérick, F-78180 Montigny Le Bretonneux (FR); GUITTON, Maurice, Lunenburg Nova Scotia BOJ 2CO (CA); GUITTON, Severine, Lunengurg Nova Scotia BOJ2CO (CA); BARIL, Claude, Laval QC Québec H7E-2N5 (CA); BRUHM, Paul, Mahone Bay Nova Scotia BOJ 2EO (CA)
(74) Mandataire: Ipside
(86) Numéro de dépôt international: PCT/EP2010/051463
(87) Numéro de publication internationale: WO 2010/092016

(56) Documents cités:
- EP-A- 0 291 639
- EP-A- 0 618 356
- FR-A1- 2 290 621
- US-A- 5 552 185
- US-A1- 2004 062 895

## Description

La présente invention appartient au domaine des pièces aéronautiques. Elle concerne plus spécifiquement des pièces de forme complexe en matériaux composites. Encore plus particulièrement, l'application visée concerne des pièces tubulaires de type tuyauteries aéronautiques destinées à un circuit d'air.

Les pièces de tuyauterie pour circuit d'air sont actuellement réalisées en matériau composite afin de gagner en masse. Elles sont fabriquées par morceaux puis assemblées. Elles sont usuellement fabriquées par drapage de tissus verre/résine phénolique sur des outillages mandrins qui sont ensuite démontés.

Ces pièces de tuyauterie d'air présentent souvent une grande complexité. Leur forme extérieure comporte éventuellement des ramifications, des coudes, elle est souvent de section variable. De plus, l'intérieur de ces tuyauteries peut présenter un ou plusieurs déflecteurs ou séparations.

Ces contraintes géométriques nécessitent alors, pour la réalisation de ces pièces, de nombreux et coûteux outillages. Alternativement, elles sont réalisées en de nombreux segments assemblés par la suite. Par ailleurs, ces pièces sont soumises à des contraintes de matériaux, devant répondre à des normes de résistance feu, fumée, toxicité etc.

Un état de la technique pertinent est le document EP 0618356 qui divulgue le préambule de la revendication 1.

L'objectif de cette invention est alors de proposer des pièces tubulaires composites de formes complexes réalisées en un seul élément, permettant :
- de diminuer et simplifier les outillages (objectif : réduction des coûts non récurrents),
- de simplifier la fabrication et assemblage des pièces (objectif : réduction des coûts récurrents),
- la création de formes très complexes permettant l'intégration de fonctions non réalisables par les procédés traditionnels, tout en conservant des tolérances de dimensions réduites,
- l'utilisation des matériaux les plus adaptés pour répondre aux normes de feu, fumée, toxicité.

A cet effet, l'invention propose une pièce tubulaire en matériau composite, selon la revendication 1, comprenant, d'une part, une pièce noyau en résine très haute température obtenue par procédé de création directe 3D, et, d'autre part, un enrobage de fibres imprégnées de résine.

On comprend que la pièce tubulaire est de forme globalement cylindrique (de section éventuellement non circulaire). Il s'agit dans l'application envisagée à titre d'exemple d'une canalisation d'air.

Dans un mode de réalisation avantageux, la pièce tubulaire comporte au moins une séparation interne du tube en plusieurs conduits ne communicants pas entre eux.

Dans ce cas, la pièce tubulaire comporte par exemple un conduit central et un ensemble d'au moins deux conduits périphériques entourant ce conduit central.

En vue d'une application particulière, elle comporte alors au moins un conduit destiné au passage de câbles.

On comprend que le développement d'un procédé de réalisation de pièces de formes arbitrairement complexe, ouvre la possibilité de concevoir des pièces de tuyauteries d'air nouvelles, non réalisables jusqu'ici.

Parmi celles-ci, il est par exemple envisageable d'intégrer dans un même tuyau d'air deux conduits ou plus recevant des flux d'air ou de gaz indépendants et éventuellement de sens opposé.

Selon divers modes de réalisation, éventuellement utilisés conjointement, la pièce tubulaire comporte :
- au moins deux coudes orientés dans des directions différentes,
- au moins une ramification,
- au moins une variation de section le long d'au moins un de ses segments,
- au moins un déflecteur interne comprenant éventuellement des coudes,
- au moins une paroi interne obturant localement partiellement la pièce tubulaire,
- au moins un segment de section principalement carrée,
- au moins un segment de section principalement hexagonale,

Selon un mode de réalisation avantageux, la pièce comporte sur une partie au moins de sa surface un revêtement anti-feu.

Dans un mode de réalisation avantageux, l'enrobage externe de fibres imprégnées de résine est réalisé sous la forme d'une tresse entrecroisée.

Une telle 'chaussette' en nappes de fibres imprégnées, est créée directement autour de la pièce tubulaire, ou enfilée sur celle-ci. Cette disposition améliore la résistance mécanique de la pièce tubulaire.

Préférentiellement, la pièce est obtenue par un procédé comprenant des étapes :
- de création d'une pièce-noyau de géométrie principalement similaire à la forme recherchée, sauf en ce qui concerne l'épaisseur extérieure, par un procédé de création tridimensionnelle,
- d'enveloppement d'au moins une de cette pièce-noyau par des fibres préalablement ou postérieurement imprégnées de résine, de manière à aboutir aux dimensions finales de la forme recherchée après durcissement de la résine,
- de durcissement de la résine.

On comprend qu'il s'agit d'un procédé de réalisation de pièce de forme géométrique complexe en matériau composite doté d'une structure renforcée de fibres.

Préférentiellement, le procédé de création tridimensionnelle est un procédé de fusion laser (SLS).

Dans le mode de réalisation préféré, la résine thermoplastique utilisée est une résine thermoplastique très haute température.

Plus particulièrement, il s'agit d'une résine thermoplastique très haute température de type PEEK (polyétheréthercétone).

Alternativement, il s'agit d'une résine thermoplastique de type PPS (pour PolyPhénylène Sulfone).

On comprend que l'invention combine des procédés connus de réalisation de pièces composites employés dans l'aéronautique et un procédé de fusion laser, a priori non utilisé dans le domaine aéronautique car produisant des pièces inaptes à répondre aux contraintes d'une utilisation en milieu aéronautique aux normes de sécurité sévères.

Dans le domaine de la fabrication de pièces de forme complexe, on connaît, des procédés du type fusion laser (en anglais laser sintering) habituellement utilisés pour la réalisation sans outillages de pièces métalliques de prototypage à partir de poudres.

De façon simplifiée, un procédé de fusion laser de type SLS (Selective Laser Sintering), également parfois appelé impression directe en 3D, est une technique de frittage (chauffage et fusion) laser sélectif sans phase liquide.

On créé ainsi des objets présentant une géométrie tridimensionnelle aussi complexe que souhaitée, couche par couche, constituées au fur et à mesure sur la couche inférieure, en utilisant l'énergie d'un laser pour entraîner la fusion locale d'une poudre (métal, nylon, polystyrène...) à l'endroit sélectionné, correspondant à une future partie pleine de la pièce souhaitée.

Le procédé s'apparente au prototypage rapide avec utilisation de poudres. Comme on l'a vu, la pièce est réalisée à partir d'un lit de poudre par consolidation de tranches successives dans une machine industrielle.

Le laser consolide la tranche en surface du lit de poudre préchauffé, le support machine s'enfonce d'une distance déterminée, un système de distribution (généralement un rouleau) dépose une nouvelle couche de poudre, consolidation d'une nouvelle tranche par laser, etc.

La pièce finale obtenue peut présenter une forme très complexe. Aucun outillage (moulage, usinage etc.) n'est nécessaire pour la réalisation de la pièce obtenue par ce procédé de fusion laser.

Le temps de réalisation des pièces dépend des dimensions et de la qualité de pièce souhaitée. Il peut être relativement long. Cependant plusieurs pièces peuvent être réalisées en même temps ce qui rend le procédé intéressant d'un point de vue industriel.

Ces procédés commencent à être utilisés avec des poudres composites. Le procédé de fusion laser est, par exemple, relativement bien développé pour des poudres du type polyamide (PA).

Les pièces en polyamide sont plutôt destinées à être des pièces de démonstration de type prototypage rapide. Leur durée de vie est relativement faible du fait de leur tenue mécanique limitée.

Des pièces en résine de type PEEK ont également été réalisées par ce procédé, et sont particulièrement destinées à des pièces sur mesure pour applications médicales (par exemple prothèses cervicales).

Cependant pour des raisons comportement matériau et températures de mise en oeuvre, la résine PEEK (poudre thermoplastique très haute température) est plus difficile à mettre en oeuvre que la résine polyamide.

La résine thermoplastique PEEK (polymère polyétheréthercétone) a une température de fusion de 350°C, d'où son appellation de résine très haute température.

Cette résine thermoplastique renforcée de fibres présente les avantages suivants : bonnes propriétés mécaniques, bonne tenue au feu, bonne tenue à l'impact, faible absorption d'humidité, réversibilité de la rhéologie lorsqu'on la chauffe à un niveau de température suffisant (par opposition aux résine thermodurcissables, présentant un comportement irréversible). Toutes ces propriétés font de la résine PEEK un matériau adapté et de plus en plus utilisé pour des applications aéronautiques dans le cadre de réalisation de pièces en matériaux composites.

Par contre, de façon générale, les pièces obtenues par un procédé de fusion laser ne sont, du fait de leur mode de réalisation, pas renforcées de fibres. Leurs caractéristiques mécaniques sont donc a priori faibles, et en conséquence, ces pièces ne sont pas spontanément destinées au marché aéronautique. Il s'agit le plus souvent de pièces prototypes, et non de pièces destinées à une utilisation réelle ou à une fabrication en série.

On connaît par ailleurs dans le domaine aéronautique divers procédés pour réaliser des pièces en matériaux composites.

Parmi ces procédés on peut notamment citer :
- le procédé de drapage de tissus ou nappes fibres longues préimprégnés de résine thermodurcissable ou thermoplastique,
- le procédé de moulage par transfert de résine "RTM" (Resin Transfer Molding) : réalisation d'une préforme fibreuse avec imprégnation dans une deuxième étape de résine thermodurcissable.

Ces procédés nécessitent une opération de polymérisation (résine thermodurcissable) ou consolidation (résine thermoplastique) en température, sous vide, et généralement sous pression.

Ces procédés sont utilisés pour la réalisation de pièces structurales ou non structurales.

L'invention propose donc des pièces tubulaires de formes très complexes, obtenues en combinant un procédé issu du domaine médical, et en choisissant alors un matériau de travail adapté aux contraintes du domaine aéronautique, avec des procédés connus en aéronautique.

Selon un premier mode de réalisation, l'enveloppement de la pièce-noyau est réalisé en utilisant un procédé de drapage de la pièce-noyau par des nappes ou de tissus pré-imprégnées de résine..

Alternativement, l'enveloppement de la pièce-noyau est réalisé en utilisant un procédé de moulage par transfert de résine.

Préférentiellement, dans l'étape de création de la pièce-noyau, au moins une partie de la surface de ladite pièce-noyau destinée à recevoir les fibres, est rendue rugueuse pour favoriser l'accroche mécanique avec la résine d'imprégnation des fibres.

Ceci est particulièrement utile dans le cas de résine thermodurcissable.

La description qui va suivre, donnée uniquement à titre d'exemple d'un mode de réalisation de l'invention, est faite en se référant aux figures annexées dans lesquelles :
la figure 1 illustre une pièce-noyau destinée à une canalisation d'air, réalisée en résine thermodurcissable très haute température par fusion laser,
la figure 2 montre l'intégration de cette pièce-noyau au sein d'une pièce plus grande comportant des outillages composés par exemple d'éléments en aluminium,
la figure 3 illustre le drapage formant la pièce complète,
la figure 4 illustre la pièce complète dans son état finalisé après extraction des outillages,
la figure 5, hors du cadre de l'invention, illustre un tube comportant plusieurs coudes et une séparation interne en deux conduits indépendants,
la figure 6 illustre de même un tube comportant un embranchement,
la figure 7 illustre de même un tube divisé en quatre conduits indépendants,
la figure 8 illustre un tube comprenant six zones formant des conduits indépendants, dont cinq entourent circonférentiellement une sixième, le long de la ligne centrale du tube, le tube comportant par ailleurs trois ramifications correspondant à certains des conduits indépendants,
la figure 9 illustre de même un tube comportant des déflecteurs longitudinaux orientant le flux dans une ramification,
la figure 10 illustre un tube enrobé d'une "chaussette' en fibres imprégnées,
la figure 11 illustre un type particulier de tube, formant amortisseur phonique et comportant une série alternée de partitions internes obstruant partiellement le tube.

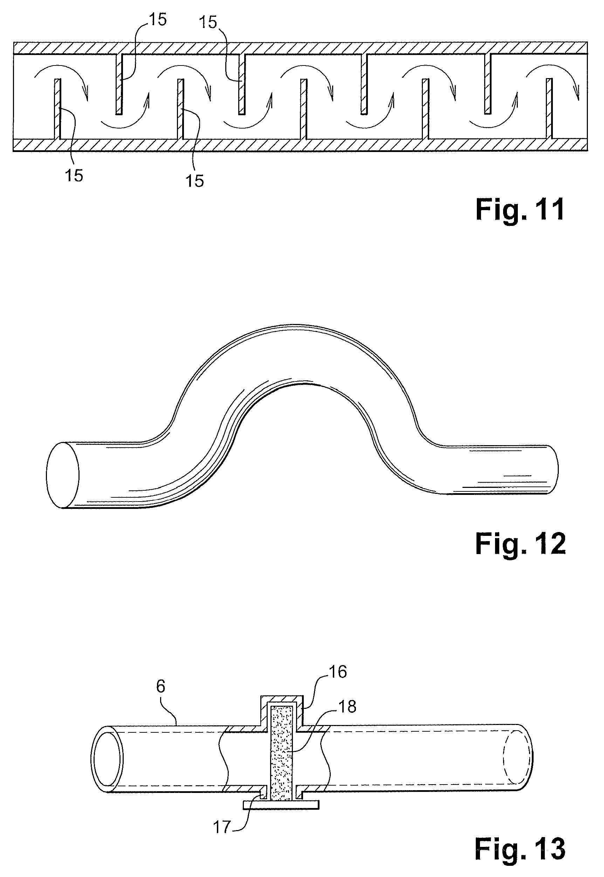

Les pièces des figures 12 illustrent des variantes géométriques, sans faire partie de l'invention.
la figure 12 illustre un tube de section initiale nettement supérieure à sa section terminale,
la figure 13 illustre un tube comportant un logement pour filtre à air,

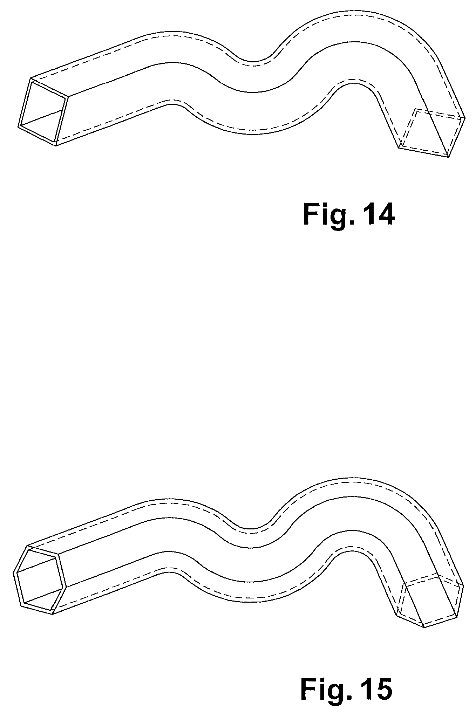

la figure 14 illustre un tube de section carrée,
la figure 15 illustre un tube de section hexagonale.

Une pièce tubulaire selon l'invention comprend une pièce-noyau composite réalisée en PEEK par un procédé de fusion laser, cette pièce-noyau PEEK servant de support lors de la réalisation d'une pièce composite par des procédés connus en soi de préimprégné ou de moulage par transfert de résine (RTM).

De façon plus détaillée, le procédé de fabrication d'une pièce tubulaire selon l'invention, est mis en oeuvre à partir des spécifications d'une pièce complète à réaliser. Ces spécifications sont obtenues par des méthodes de conception classiques, par exemple par utilisation de logiciels de CAO.

Le procédé comprend alors une première étape 100 de réalisation d'une pièce-noyau 1 par procédé de fusion laser (SLS), travaillant sur un matériau de type résine très haute température, ici un polymère polyétheréthercétone (PEEK par abréviation).

D'une manière pratique, comme il sera compris de l'exemple décrit de l'invention, il convient de comprendre par résine à très haute température une résine qui d'une part présente des caractéristiques physiques et chimiques stables aux températures auxquelles peuvent être soumises en service des pièces réalisées avec une telle résine et qui d'autre part dans le cadre de la présente invention présente une stabilité suffisante aux températures auxquelles sont soumises temporairement les pièces au cours de leur processus de fabrication.

Les données de conception de la pièce-noyau 1 à réaliser sont obtenues à partir des données de conception de la pièce complète, en tenant compte de l'épaisseur à venir de fibres imprégnées de résine sur une partie de la surface de la pièce (et de leur éventuelle variation lors d'une phase de durcissement). Ces données relatives à la pièce-noyau 1 à réaliser sont alors intégrées dans un logiciel de pilotage du dispositif de fusion laser utilisé.

Le procédé de fusion laser est supposé connu en soi, et n'est donc pas détaillé plus avant ici. Les dimensions de la pièce-noyau à réaliser sont limitées uniquement par les caractéristiques du dispositif de fusion laser.

De même, le matériau PEEK et ses conditions de mise en oeuvre sont supposés connus en soi.

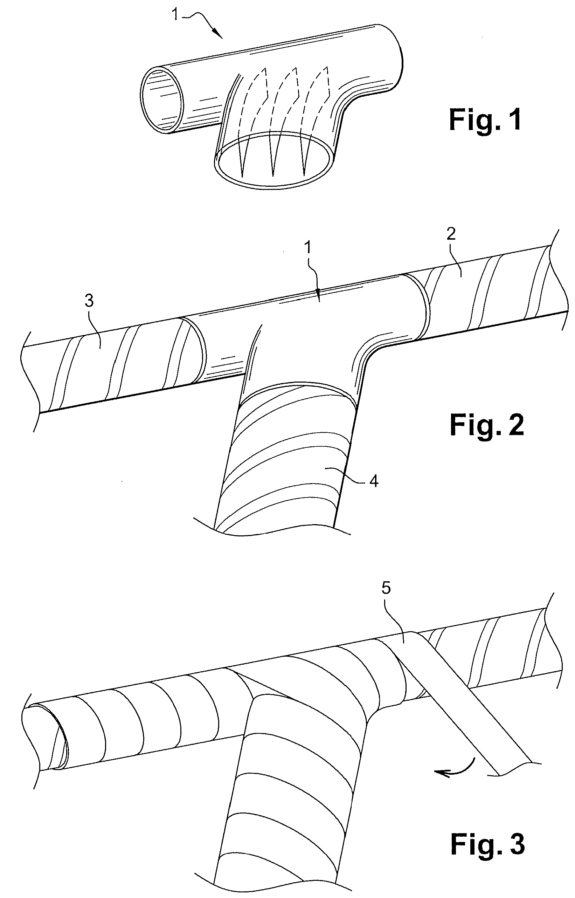

On voit sur la figure 1 la pièce-noyau 1, une fois réalisée par procédé de fusion laser. Cette pièce-noyau 1 comporte ici une ramification coudée incluant dans sa partie intérieure trois déflecteurs. Elle est clairement difficile à réaliser par des méthodes classiques. Elle pourrait en fait comporter de multiples ramifications, séparations internes en conduits distincts, variations de section ou d'épaisseur, sans modifications de cette étape du procédé.

La pièce-noyau 1 est donc réalisée avec des dimensions intérieures conformes aux spécifications de la pièce finale à réaliser, et des dimensions extérieures adaptées en tenant compte de l'épaisseur à venir de fibres imprégnées.

La surface de la pièce-noyau en PEEK est rendue rugueuse, par des méthodes connues, pour favoriser l'accroche mécanique avec la résine des tissus ou nappes (notamment dans le cas de résines thermodurcissables).

Dans une seconde étape 105 du procédé (figure 2), la pièce-noyau 1 est assemblée avec des outillages 2, 3, 4, ici de type tubulaires en aluminium. Ces outillages, de forme géométrique simple, sont réalisés par des méthodes connues en soi. Leurs sections terminales sont naturellement adaptées à un assemblage correct avec les sections terminales de la pièce-noyau. Elles présentent également des dimensions extérieures adaptées à leur futur enrobage dans des fibres imprégnées. La surface de ces outillages 2, 3, 4 est éventuellement traitée en vue de leur enrobage par fibres imprégnées, puis de leur extraction.

Les outillages utilisés peuvent également être constitués de vessies gonflables, non représentées sur le dessin, constituées par exemple d'un matériau silicone, matériau largement utilisé dans le cadre de la polymérisation de résine thermodurcissables. Ces vessies sont alors extractibles après polymérisation.

Dans une étape suivante 110 (figure 3), la pièce intermédiaire assemblée obtenue à l'issue de l'étape précédente est enveloppée de tissus ou de nappes 5 de fibres préimprégnées de résine (thermodurcissable dans le présent exemple), ici par enroulement autour des différents segments de la pièce. On note que le drapage concerne la pièce-noyau 1 et les outillages 2, 3, 4. Le drapage est réalisé par une technique connue en soi.

La résine thermodurcissable peut être époxy, phénolique, résine polyuréthane (PU), autres résines répondant aux normes feu, fumée, toxicité et avec une température de polymérisation ne dépassant pas 200°C (pour éviter de s'approcher de la température de fusion de la résine PEEK).

On note que les parois de la pièce PEEK doivent être étanches pour permettre le drapage des tissus ou nappes (du fait des contraintes liées à la polymérisation sous vide).

En variante, le procédé de drapage est remplacé par un procédé RTM de moulage par transfert de résine. Il s'agit alors de réaliser sur la pièce-noyau 1 en résine très haute température PEEK une préforme fibreuse sèche qui est ensuite imprégnée de résine dans un outillage ou un environnement étanche prévu à cet effet.

Le procédé de moulage par transfert de résine (RTM, procédé connu en soi) se caractérise par le fait que des couches de fibres sèches prédécoupées sont placées dans un moule, qui est scellé, et dans lequel on injecte une résine, qui vient imprégner les fibres. Dans le cas de fibres imprégnées de résine thermodurcissable, une polymérisation de la résine est ensuite réalisée.

Dans les deux cas, dans une étape suivante 120, la pièce complète est finalisée par polymérisation de la résine, puis les outillages 2, 3, 4, en métal ou en matériau souple, sont extraits, ici par traction selon leur axe.

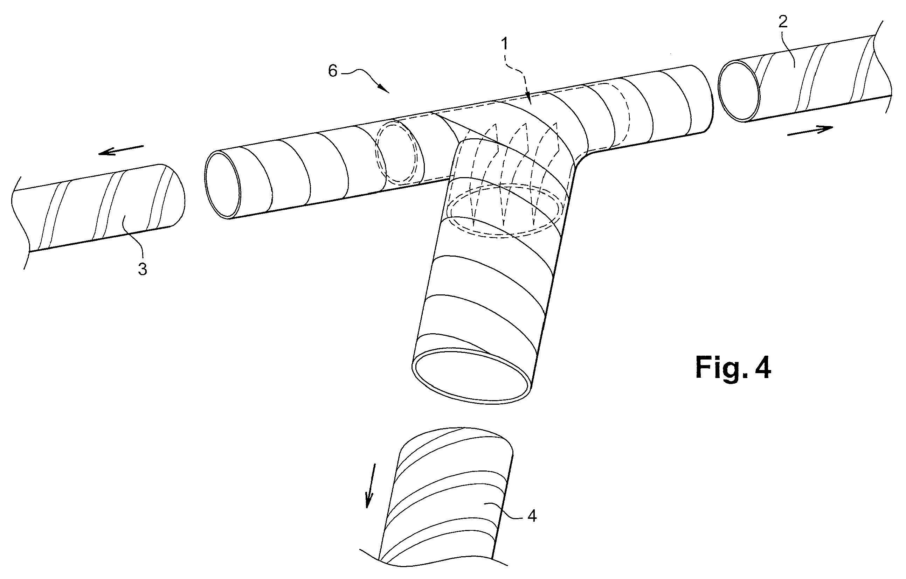

La figure 4 illustre alors l'état final de la pièce complète 6.

L'intérêt de combiner les deux procédés permet de profiter des avantages de chaque procédé, et minimiser les inconvénients :
1/ la pièce PEEK est réalisée sans outillage.
2/ la pièce PEEK peut avoir une forme complexe avec intégration de fonctions, avec un impact négligeable sur le coût de réalisation. Elle peut être nettement plus longue (d'un seul tenant) que par les procédés connus.
3/ le drapage des tissus s'effectue sur la pièce PEEK, ce qui ne nécessite pas ou peu d'outillages. Lorsque des outillages sont utilisés, il s'agit d'outillages nettement plus simples que ceux qui seraient nécessaires à la réalisation des pièces de formes complexes par les techniques traditionnelles.
4/ les tissus ou nappes apportent le renforcement nécessaire à l'obtention de propriétés mécaniques suffisantes pour la pièce finale. La tenue mécanique de la pièce PEEK doit donc uniquement permettre l'opération de drapage et/ou imprégnation, puis polymérisation. Ce qui permet de simplifier la conception et la réalisation de la pièce PEEK. La température de polymérisation des résines utilisées ne dépasse pas 200°C. Ce niveau de température permet de ne pas modifier la géométrie de la pièce PEEK.
5/ la résine PEEK répond très bien aux normes feu, fumée, toxicité.

Le procédé est particulièrement adapté aux pièces fermées ou de révolution (par exemple pièces tubulaires). Dans ce cas le drapage des tissus ou nappes se fait autour de la pièce PEEK.

L'utilisation du procédé ouvre la voie à la réalisation de pièces tubulaires, par exemple pour circuit d'air, jusqu'ici non envisageables.

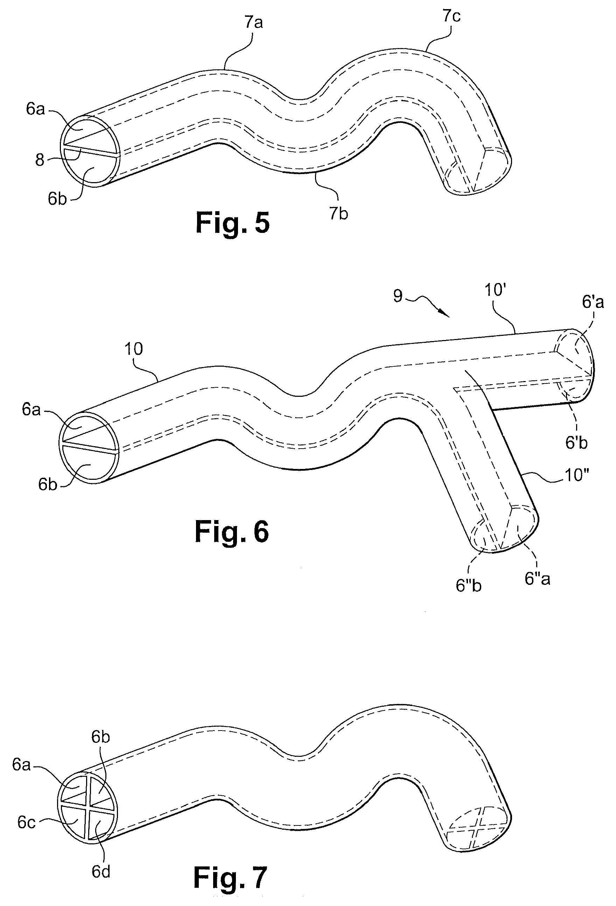

Divers types de pièces particulières réalisables par le procédé tel qu'exposé sont ainsi illustrés par les figures 5 à 15.

Comme on le voit sur la figure 5, la pièce complète 6 peut prendre la forme d'un tube cylindrique présentant plusieurs coudes 7a, 7b, 7c (trois sur la présente illustration non limitative). Ces coudes 7a, 7b, 7c sont par exemple destinés à faciliter la fixation de la pièce complète 6 le long d'une paroi interne d'un fuselage d'avion, elle-même de forme complexe du fait des innombrables éléments de structure et équipements installés dans l'avion.

La pièce complète 6 présente également une séparation interne 8, ici disposée sous la forme d'une surface réglée dont la génératrice est un diamètre du tube cylindrique. Une telle pièce comporte ainsi deux conduits internes 6a, 6b, adaptés par exemple au passage de flux d'air en sens opposés, ou simplement de flux d'air indépendants.

La figure 6 illustre un tube similaire à celui de la figure 5, mais comportant également une ramification 9 du tube principal 10 en deux tubes secondaires 10', 10". Dans le cas illustré, la ramification conserve la séparation du tube en deux conduits, et chaque tube secondaire 10', 10" comporte donc également deux conduits (notés 6'a, 6'b et 6"a, 6"b respectivement). Il est clair que la ramification peut concerner un seul des deux conduits de façon très simple.

Une variante de la figure 5 est illustrée par la figure 7, sur laquelle on retrouve un tube cylindrique 6 coudé, divisé ici en quatre conduits internes 6a, 6b, 6c, 6d, par une séparation en croix.

Selon les besoins de l'application considérée, l'un des conduits internes peut recevoir un traitement de surface (par peinture anti-feu par exemple) différent des autres conduits.

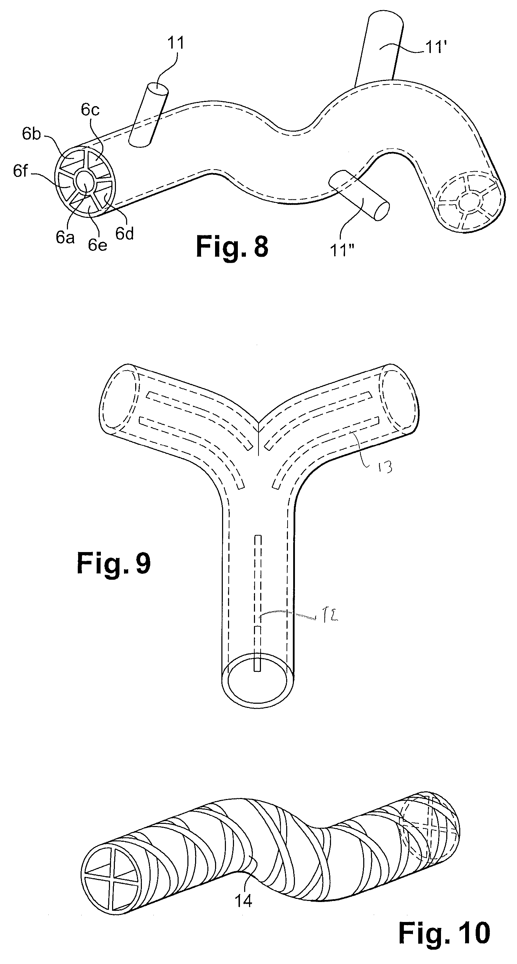

Dans une variante encore plus sophistiquée de ce concept, telle qu'illustrée par la figure 8, la pièce tubulaire complète 6 comporte un conduit tubulaire central 6a, globalement cylindrique et concentrique de le pièce complète 6, entouré de 5 conduits périphériques 6b, 6c, 6d, 6e, 6f.

Ces conduits périphériques 6b, 6c, 6d, 6e, 6f sont ici de section sensiblement identique, laquelle est délimitée par un arc de cercle de la paroi externe de la pièce complète 6, un arc de cercle de la paroi externe du conduit central 6a, et des rayons de la pièce complète 6, répartis à intervalles angulaires égaux.

La pièce complète 6 présente ici également des ramifications 11, 11', 11 ", lesquelles concernent ici chacune un seul conduit périphérique. Il est clair que ces ramification pourraient également concerner deux conduits internes ou plus, selon les besoins.

Dans cette configuration, la pièce complète 6 est typiquement destinée à acheminer des flux d'air (par exemple destinés à différents zones de l'avion) dans les conduits périphériques, et un ensemble de câbles dans le conduit central 6a.

Les flux d'air étant ici indépendants, il est concevable de véhiculer des flux d'air de températures différentes à destination de différentes zones de l'avion par exemple.

De même, ce type de tube à conduits multiples permet d'alimenter les différentes bouches d'aération indépendamment les unes des autres. Vis à vis d'un tube à conduit simple, ceci permet en particulier d'éviter que le flux d'air soit plus fort au plus près du dispositif de conditionnement, et plus faible pour les bouches d'aération les plus éloignées de celui-ci.

Un autre type de pièce, réalisable par le procédé décrit, est illustré figure 9. Cette pièce tubulaire 6 comporte une ramification 9, les deux tubes secondaires 10', 10" étant coudés. Le tube principal 10 comporte ici deux déflecteurs internes 12, 13 permettant d'orienter le flux d'air.

Ces déflecteurs 12, 13 se présentent sous la forme de parois internes au tube, non nécessairement sur toute la largeur de celui-ci (ou seulement sur une longueur déterminée du tube). Le flux d'air n'est donc pas nécessairement séparé en plusieurs volumes indépendants, mais est mieux canalisé pour éviter les turbulences.

Comme on le voit sur la figure 9, des déflecteurs secondaires sont ici également disposés dans les ramifications 10', 10" du tube 6.

Dans une variante de réalisation de la partie extérieure de la pièce complète, illustrée figure 10, la pièce-noyau 1 en résine très haute température PEEK, séparée en quatre conduits internes par une séparation en croix, est entourée par une "chaussette" 14 en fibres imprégnées. Cette "chaussette" tressée autour de la pièce noyau, ou enfilée sur elle, permet d'obtenir une très bonne résistance mécanique de la pièce finale 6. Elle comporte typiquement deux nappes de fibres enroulées en spirale de façon entrecroisée autour de la pièce tubulaire.

La figure 11 montre une réalisation de pièce tubulaire 6 comportant un amortisseur de bruit interne, réalisé sous forme d'une alternance de séparateurs internes 15 perpendiculaires au tube 6, créant un cheminement forcé pour le flux d'air dans le tube, selon une géométrie classique.

D'autres géométries permettant un amortissement du bruit peuvent également être considérées.

La figure 12 montre un tube à coude multiples, et de section décroissante, permettant ainsi une accélération du flux d'air en sortie du tube. Un tel tube n'est pas réalisable de façon simple par des méthodes classiques.

Comme on le voit sur la figure 13, le tube 6 peut comporter un logement 16 et une ouverture en surface 17, destinées à recevoir un filtre à air 18 de type connu en soi, interchangeable.

Les figures 14 et 15 illustrent enfin la possibilité de réaliser des tubes de section rectangulaire ou polygonale (ici hexagonale), selon les contraintes d'utilisation et de zone interne à l'avion destinée à accueillir le tube.

Dans le cas de section rectangulaire, le présent procédé permet la réalisation de pièces présentant deux parois minces et deux parois épaisses, selon les contraintes mécaniques ou d'environnement auxquelles la pièce doit répondre.

Ces géométries sont naturellement compatibles avec des ramifications et des séparations, ou déflecteurs internes telles qu'exposés plus haut.

Dans une autre variante, la pièce en résine thermoplastique PEEK n'est pas complètement recouverte par des nappes de fibres imprégnées. Elle comporte par exemple des picots faisant saillie, et destinés à former des supports de fixation sur la structure de l'aéronef, ou des supports de fixation d'autres équipements ou éléments.

On comprend que l'utilisation du procédé permet de créer des pièces qui se rapprochent le plus possible de l'application finale en cabine de l'aéronef.

Dans une autre variante, non illustrée, la pièce tubulaire 6 reçoit en surface un traitement par peinture anti-feu. D'autres types de traitements sont naturellement envisageables, selon les besoins d'applications spécifiques.

En variante de matériau, on utilise une résine thermoplastique de type PPS (PolyPhénylène Sulfone) en lieu et place de la résine PEEK évoquée dans la description, sans modification substantielle du procédé.

Dans une variante de réalisation, les pièces tubulaires comportent également un drapage sur au moins une partie d'une surface intérieure, drapage qui permet d'éviter par exemple une abrasion qui pourrait provoquer une usure prématurée de la pièce PEEK). Dans cette configuration, la pièce PEEK est comprise entre deux drapages : l'un d'entre eux à l'intérieur, et l'autre en surface externe.

## Revendications

1. Pièce tubulaire (6) en matériau composite comprenant, d'une part, une pièce noyau (1) en résine très haute température, et, d'autre part, un enrobage de fibres (5) imprégnées de résine polymérisées, la pièce noyau comportant en son intérieur, sur au moins une partie de sa longueur, des séparateurs internes (12, 13, 15) **caractérisée en ce que** la pièce-noyau est obtenue par un procédé de fusion laser et **en ce que** l'enrobage s'étend au-delà de sections terminales de la pièce-noyau.

2. Pièce tubulaire selon la revendication 1, **caractérisée en ce qu'**elle comporte au moins une séparation interne du tube en plusieurs conduits (6a, 6b) ne communicants pas entre eux.

3. Pièce tubulaire selon la revendication 2, **caractérisée en ce qu'**elle comporte au moins un conduit central et un ensemble d'au moins deux conduits périphériques entourant ce conduit central.

4. Pièce tubulaire selon l'une quelconque des revendications précédentes, **caractérisée en ce qu'**elle comporte, éventuellement conjointement :
- au moins deux coudes (7),
- au moins une ramification (9),
- au moins une variation de section le long d'au moins un de ses segments,
- au moins un déflecteur interne (12) comprenant éventuellement des coudes,
- au moins une paroi interne (15) obturant localement partiellement la pièce tubulaire,
- au moins un segment de section principalement carrée,
- au moins un segment de section principalement hexagonale.

5. Pièce tubulaire selon l'une quelconque des revendications précédentes, **caractérisée en ce que** la résine très haute température est une résine thermoplastique de type PEEK (polyétheréthercétone).

6. Pièce tubulaire selon l'une quelconque des revendications 1 à 4, **caractérisée en ce que** la résine très haute température est une résine thermoplastique de type PPS (polyphénylène sulfone).

7. Pièce tubulaire selon l'une quelconque des revendications précédentes, **caractérisée en ce que** l'enrobage externe de fibres (5) imprégnées de résine est réalisé sous la forme d'une tresse entrecroisée.

8. Pièce tubulaire selon l'une quelconque des revendications précédentes, **caractérisée en ce qu'**elle comporte un traitement de surface par peinture anti-feu.

9. Pièce tubulaire selon l'une quelconque des revendications précédentes, **caractérisée en ce qu'**elle est réalisée par un procédé comprenant des étapes :
100 - de création d'une pièce-noyau (1) de géométrie principalement similaire à la forme recherchée, sauf en ce qui concerne l'épaisseur extérieure, par un procédé de création tridimensionnelle de type fusion laser, ladite pièce-noyau étant réalisée en résine thermoplastique très haute température,
110 - d'enveloppement d'au moins une partie de cette pièce-noyau (1) par des fibres (5) préalablement ou postérieurement imprégnées de résine, jusqu'à aboutir aux dimensions finales de la forme recherchée,
120 - de durcissement de la résine.

## Patentansprüche

1. Röhrenförmiges Teil (6) aus Verbundmaterial, umfassend einerseits einen Kernteil (1) aus Hochtemperaturharz und andererseits eine Faserummantelung (5), die mit polymerisiertem Harz imprägniert ist, wobei der Kernteil in seinem Inneren auf mindestens einem Teil seiner Länge interne Trennungen (12, 13, 15) aufweist, **dadurch gekennzeichnet, dass** der Kernteil durch ein Laserfusionsverfahren erhalten wird, und dass die Ummantelung sich über die Endabschnitte des Kernteils hinaus erstrecken.

2. Röhrenförmiges Teil nach Anspruch 1, **dadurch gekennzeichnet, dass** es mindestens eine interne Trennung des Rohres in mehrere Kanäle (6a, 6b) aufweist, die nicht miteinander in Verbindung stehen.

3. Röhrenförmiges Teil nach Anspruch 2, **dadurch gekennzeichnet, dass** es mindestens einen zentralen Kanal und eine Gruppe von mindestens zwei Umfangskanälen aufweist, welche diesen zentralen Kanal umgeben.

4. Röhrenförmiges Teil nach irgendeinem der vorhergehenden Ansprüche, **dadurch gekennzeichnet, dass** es möglicherweise gleichzeitig aufweist:
- mindestens zwei Biegungen (7),
- mindestens eine Verzweigung (9),
- mindestens eine Querschnittsveränderung entlang mindestens eines seiner Segmente,
- mindestens einen internen Abweiser (12), der möglicherweise Biegungen umfasst,
- mindestens eine Innenwand (15), welche das röhrenförmige Teil örtlich teilweise versperrt,
- mindestens ein Segment mit im Wesentlichen quadratischem Querschnitt,
- mindestens ein Segment mit im Wesentlichen sechseckigem Querschnitt.

5. Röhrenförmiges Teil nach irgendeinem der vorhergehenden Ansprüche, **dadurch gekennzeichnet, dass** das Hochtemperaturharz aus thermoplastischem Harz der Art PEEK (Polyetheretherketon) besteht.

6. Röhrenförmiges Teil nach irgendeinem der Ansprüche 1 bis 4, **dadurch gekennzeichnet, dass** das Hochtemperaturharz aus thermoplastischem Harz der Art PPS (Polyphenylsulfon) besteht.

7. Röhrenförmiges Teil nach irgendeinem der vorhergehenden Ansprüche, **dadurch gekennzeichnet, dass** die äußere Faserummantelung (5), die mit Harz imprägniert ist, in Form eines ineinandergreifenden Geflechts vorliegt.

8. Röhrenförmiges Teil nach irgendeinem der vorhergehenden Ansprüche, **dadurch gekennzeichnet, dass** es eine Oberflächenbehandlung durch feuerhemmende Farbe aufweist.

9. Röhrenförmiges Teil nach irgendeinem der vorhergehenden Ansprüche, **dadurch gekennzeichnet, dass** es durch ein Verfahren hergestellt wird, das die folgenden Schritte umfasst:
100 -Herstellen eines Kernteils (1) mit im Wesentlichen ähnlicher Geometrie wie die gewünschte Gestalt, außer hinsichtlich der Außenstärke, durch ein dreidimensionales Herstellungsverfahren der Laserfusionsart, wobei der Kernteil aus thermoplastischem Hochtemperaturharz hergestellt wird,
110 -Umwickeln mindestens eines Teils des Kernteils (1) mit Fasern (5), die zuvor oder nachher mit Harz imprägniert wurden/werden, bis die Endabmessungen der gewünschten Gestalt erreicht werden,
120 -Aushärten des Harzes.

## Claims

1. Tubular part (6) made of composite material comprising, on the one hand, a core part (1) made of very high temperature resin, and, on the other hand, a coating of fibres (5) impregnated with polymerized resin, the core part
comprising, in its interior, over at least a part of its length, internal separators (12, 13, 15), **characterized in that** the core part is obtained by a laser fusion method and **in that** the coating extends beyond terminal sections of the core part.

2. Tubular part according to Claim 1, **characterized in that** it comprises at least one internal separation of the tube into a number of ducts (6a, 6b) not communicating with one another.

3. Tubular part according to Claim 2, **characterized in that** it comprises at least one central duct and a set of at least two peripheral ducts surrounding this central duct.

4. Tubular part according to any one of the preceding claims, **characterized in that** it comprises, possibly jointly:
- at least two bends (7),
- at least one branching (9),
- at least one variation of section along at least one of its segments,
- at least one internal deflector (12) possibly comprising bends,
- at least one internal wall (15) locally partially blocking the tubular part,
- at least one segment of mainly square section,
- at least one segment of mainly hexagonal section.

5. Tubular part according to any one of the preceding claims, **characterized in that** the very high temperature resin is a thermoplastic resin of PEEK (polyether ether ketone) type.

6. Tubular part according to any one of Claims 1 to 4, **characterized in that** the very high temperature resin is a thermoplastic resin of PPS (polyphenylene sulphone) type.

7. Tubular part according to any one of the preceding claims, **characterized in that** the outer coating of resin-impregnated fibres (5) is produced in the form of an interlaced braid.

8. Tubular part according to any one of the preceding claims, **characterized in that** it comprises a surface treatment by fireproof paint.

9. Tubular part according to any one of the preceding claims, **characterized in that** it is produced by a method comprising steps:
100 - of creation of a core part (1) of geometry primarily similar to the shape sought, except with regard to the outer thickness, by a three-dimensional creation method of laser fusion type, said core part being produced in very high temperature thermoplastic resin,
110 - of jacketing of at least a part of this core part (1) with fibres (5) pre- or post-impregnated with resin, until the final dimensions of the shape sought are relieved,
120 - of hardening of the resin.
